# EUROPEAN PATENT SPECIFICATION

(11) **EP 0 881 733 B1**
(45) Date of publication and mention of the grant of the patent: **28.11.2007**
(21) Application number: 98103554.6
(22) Date of filing: 28.02.1998
(51) Int. Cl.: H02H 7/12, H02J 5/00, H02J 3/36, H02M 7/797

(54) **Valve overcurrent protection in electric power transmission plant**
Ventilüberstromschutz in einer Anlage zur elektrischen Kraftübertragung
Protection contre les surintensités de courant pour valve dans une installation de transmission d'énergie électrique

(30) Priority: 24.03.1997 SE 9701063
(43) Date of publication of application: 02.12.1998
(73) Proprietor: ABB AB, 721 83 Västerås (SE)
(72) Inventor: Svensson, Kjell, 771 41 Ludvika (SE); Pålsson, Rolf, 772 04 Saxdalen (SE)
(74) Representative: Olsson, Jan

(56) References cited:
- EP-A- 0 762 622
- US-A- 4 638 416
- US-A- 4 719 554
- US-A- 5 214 575
- US-A- 5 371 664

## Description

### FIELD OF THE INVENTION AND PRIOR ART

The present invention relates to a plant for transmitting electric power comprising a direct voltage network and at least one alternating voltage network connected thereto through a station, said station being adapted to perform transmitting of electric power between the direct voltage network and the alternating voltage network and comprising at least one VSC-converter adapted to convert direct voltage into alternating voltage and conversely and an apparatus for controlling the converter, said apparatus being adapted to control the converter of the station for regulating the current therethrough, said converter having on the direct voltage side thereof two current valves connected in series between the two poles of the direct voltage network with the alternating voltage network connected to a point for the interconnection of the valves, and in which each current valve has at least one breaker of turn-on and turn-off type and a diode connected in anti-parallel therewith and the breakers of the two current valves are directed in the same direction.

Such a plant has recently been known through the thesis "PWM and control of two and three level high power voltage source converters" by Anders Lindberg, Kungliga Tekniska Högskolan, Stockholm, 1995, in which publication such a plant for transmitting electric power through a direct voltage network for High Voltage Direct Current (HVDC) is described. It is pointed out that the invention is not restricted to this application, but for illuminating but accordingly not limiting the invention exactly this application of plants of the type defined above will be discussed hereinafter.

Before the issuance of said thesis plants for transmitting electric power through a direct voltage network for High Voltage Direct Current have been based upon the use of line-commutated CSC (Current Source Converter) converters in stations for power transmission. By the development of IGBTs (Insulated Gate Bipolar Transistor = bipolar transistor having an insulated gate) for high voltage applications and the suitability to connect them in series in valves in converters, since they may easily be turned on and turned off simultaneously, VSC (Voltage Source Converter) converters for forced commutation have now instead become an alternative, and this type of transmission of electric power between a direct voltage network for High Voltage Direct Current being voltage-stiff therethrough and alternating voltage networks connected thereto offers several important advantages with respect to the use of line-commutated CSCs in HVDC, of which it may be mentioned that the consumption of active and reactive power may be controlled independently of each other and there is no risk of commutation failures in the converter and by that no risk of transmission of commutation failures between different HVDC links, which may take place in line-commutated CSC. Furthermore, there is a possibility to feed a weak alternating voltage network or a network without a generation of its own (a dead alternating voltage network). Further advantages are also there.

In a plant of the type defined in the introduction the differential coefficient of the current through the inductance located on the alternating voltage side of the converter is determined in a conventional way by the difference between the voltage of the alternating voltage network and the direct voltage of direct voltage network and is directly proportional to this difference. This means that should for example the alternating voltage suddenly decrease as a consequence of a ground fault in the alternating voltage network, then will the current through that breaker, normally an IG-BT, which is conducting exactly at that moment in one of the converter valves increase rapidly, in which the current differential coefficient is determined by the phase position of the alternating voltage and the amplitude depends upon the current when the fault occurs. The margin between regular peak current through the converter and the maximum current which may be turned off of the breakers in the current valves is preferably kept as small as possible, which means that it gets difficult for the regular current regulation carried out by the control apparatus of the station to always have time to limit the current so that no over current protection has to be activated. However, it is of a great disadvantage if the over current protection is activated, since it results in a temporary blocking of the converter, which in its turn results in an increase of the voltage in the direct voltage network, which then disturbs all the converters connected thereto. Thus, in the latter case there is a need of rapidly limiting the current and by that preventing a temporary blocking of the converter from occurring. The same problem may arise under suddenly inverted circumstances between the alternating voltage and the direct voltage, i.e. if the alternating voltage suddenly increases rapidly and the direct voltage has a low value. This may occur when the alternating voltage returns after a disconnection of the alternating voltage network as a consequence of a fault, which may result in a high returning alternating voltage, which may in addition thereto be combined with the fact that the direct voltage has been low during said disconnection.

### SUMMARY OF THE INVENTION

The object of the present invention is to provide a plant of the type defined in the introduction, in which the problems mentioned above at a rapidly increasing current through the converter are reduced, so that it may to a much larger extent than before be avoided that an over current protection present in the plant is activated and temporarily blocks the converter.

This object is according to the invention obtained by providing a plant according to claim 1. Preferred embodiments of the invention are defined in the dependent claims. The plant comprises members adapted to detect the direction and the intensity of the current through the converter and through which current valve the current flows and means adapted to, based upon information from said members, compare the intensity of the current with a predetermined lower first value exceeding the current normally accepted through the converter and a predetermined second upper value and upon recognising the location of the current between said values and a recognising at the same time that the current flows through said breakers of one of the current valves, actuate the control apparatus to control the converter to commutate the current to flow through the other current valve.

By commutating the current in this way to the other current valve an over current through the breaker in one of the current valves may be reduced instantaneously, so that a temporary blocking of the converter may be avoided. By the fact that it is a condition for the commutation that said members recognise that the current flows through a breaker in one of the current valves, it is ensured that the commutation under no circumstances is activated if the current flows through the diode of the current valve, which would result in a commutation of the current over to the breaker of the other current valve and the current by that would increase even faster. By the presence of said predetermined second upper value it is in addition thereto ensured that no commutation takes place when the current is too high, since commutation of no type may be considered then, but a temporary blocking of the converter has to take place as a consequence of a power generation in the components of the plant being otherwise too high.

US-A-4 719 554 discloses a plant having current valves and how an overcurrent in said plant is measured and a protection function is activated in the case that the overcurrent exceeds a first value during a certain period of time. However, the plant according to this publication does not differentiate between a current through a breaker and diode.

US-A-5 214 575 shows that it is already known to arrange overcurrent detecting means at each breaker of a VSC-converter for detecting earth faults on the output side of an inverter circuit. However, it is nowhere in these publications mentioned that it would upon occurrence of an overcurrent in a converter be desired to commutated the current from one valve to the other in the case that the overcurrent would flow through a breaker, which here is a semiconductor device of turn-off type, so as to instead conduct the current through the diode of the other valve as is the case in the plant according to the present invention.

According to a preferred embodiment of the invention said means are adapted to activate an over current protection temporarily blocking the entire converter upon a detection of a current having an intensity between said predetermined value and a simultaneous recognising that the current flows through the diode of one of the current valves. It is by this ensured that the converter is temporarily blocked in diode current, instead of a commutation to the breaker of the other current valve, which would lead to an even higher current through the converter and a risk of damage of the equipment of the station.

According to another preferred embodiment, which constitutes a further development of the embodiment last mentioned, said means are adapted to activate the over current protection on the condition that the current after elapsing of a predetermined period of time from it has exceeded said first value is still higher than this value. By delaying a temporary blocking of the converter in this way a temporary blocking of the converter may possibly also be prevented at a diode current should the over current be caused by a transient over voltage in the alternating voltage network.

According to another preferred embodiment of the invention said means are adapted to, when a value of the current exceeding said second value is detected, activate an over current protection temporarily blocking the entire converter irrespectively whether the current flows through the diode or the breaker of the current valve conducting for the moment. Thus, should the current for any reason run up to a value exceeding the second value at breaker current without a switching over of the breaker to the diode of the other current valve or the current increase over this second value at diode current, it is then ensured by this characteristic of the plant according to the invention that the over current protection temporarily blocking the converter is immediately activated and the converter and the equipment connected thereto are protected thereby.

According to another preferred embodiment of the invention the control apparatus is adapted to continuously carry out the regular current regulation thereof also when said means as a result of their comparisons activates the actuation of the converter. It is advantageous to let the regular current regulation "be overridden" during the short period of time in which said means interfere and actuate the converter, since this by this also influences the current in the correct direction and ensures that it is kept at an acceptable level when said means have terminated their actuation.

According to another preferred embodiment of the invention the plant comprises more than one said VSC-converter. In the case of a plurality of such converters in the plant it is particularly important that a temporary blocking of the converter is in the way according to the invention as far as possible avoided, since such a blocking thereof leads to a temporary increase of the direct voltage of the direct voltage network, which is sensed by the other converters, and there is then a risk of activation of any over voltage protection blocking one of them, so that the direct voltage increases further and a chain reaction having costly consequences could occur.

According to another preferred embodiment of the invention the plant is designed for transmitting electric power through a direct voltage network for High Voltage Direct Current (HVDC). The advantages of the plant according to the invention are particularly apparent in this preferred application.

Further advantages as well as advantageous features of the invention will appear from the following description and the other dependent claims.

### BRIEF DESCRIPTION OF THE DRAWINGS

With reference to the appended drawings, below follows a description of a preferred embodiment of the invention cited as an example.

### In the drawings:

Fig 1 is a very schematic block diagram illustrating the principle of the invention, and

Fig 2 is a block diagram illustrating the function of the comparing means included in the plant according to the invention.

### DETAILED DESCRIPTION OF A PREFERRED EMBODIMENT OF THE INVENTION

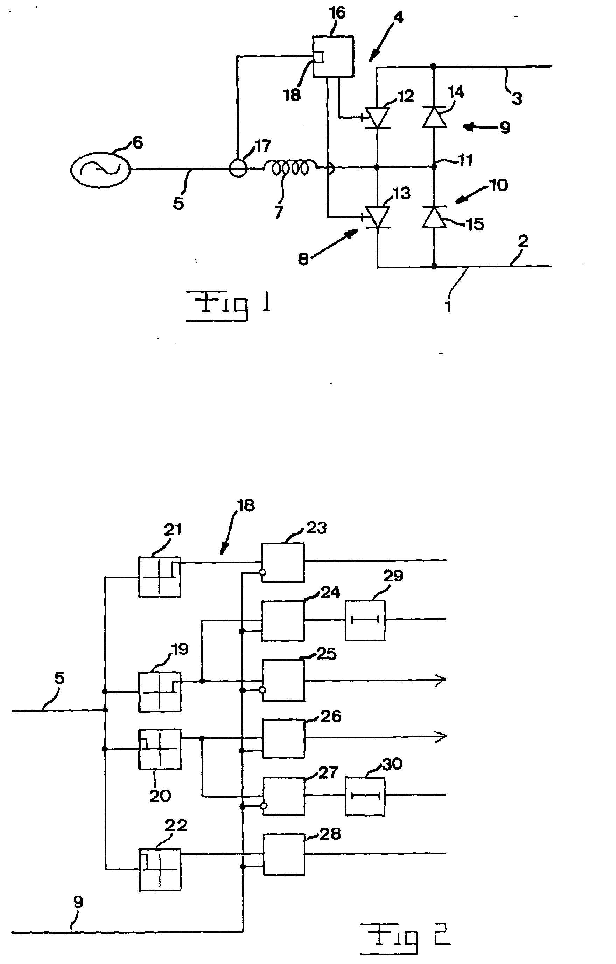

The structure of a plant for transmitting electric power according to the invention is very schematically illustrated in Fig 1 in which only the different components having directly something to do with the function according to the invention have been shown in the drawing for facilitating comprehension of the invention. The plant comprises a direct voltage network 1 for High Voltage Direct Current (HVDC = High Voltage Direct Current).

The plant has further an alternating voltage network 5 connected to the direct voltage network through a station 4, which is indicated by an alternating voltage symbol 6 and an inductance 7. The station is designed to perform transmitting of electric power between the direct voltage network 1 and the alternating voltage network 5, in which the power may be fed in from the alternating voltage network to the direct voltage network or fed out from the direct voltage network to the alternating voltage network. Thus, the alternating voltage network may have generators of electric power or only be connected to consumers thereof. The station comprises at least one VSC-converter 8 adapted to convert direct voltage into alternating voltage and conversely. However, it is within the scope of the invention that the station comprises a plurality of such converters, although only one such has been shown in the figure. It is also possible that the alternating voltage network has more than one phase, most often three phases, but the alternating voltage network is in the figure summarised through one single line. Thus, in the case of more than one phase each phase has a converter of its own. The VSC-converter 8 comprises in a conventional way two so called current valves 9, 10 here called first and second, respectively. These two current valves are connected in series between the two poles 2, 3 of the direct voltage network, and the alternating voltage network is connected to a point of the connection 11 of the valves. Each current valve has at least one breaker 12, 13 of turn-on and turn-off type and a diode 14, 15 connected in anti-parallel therewith, in which the breakers of the two current valves are directed in the same direction. The breakers are preferably in the form of IGBTs and are present in a comparatively great number in each current valve, even though they are in the figure summarised through one single symbol. A great number of IGBTs may for example be connected in series in one single valve so as to be turned on and turned off simultaneously so as to act as one single breaker, wherethrough the voltage across valve is distributed among the different breakers connected in series. The control of the breakers takes place in a conventional way by pulse with modulation (PWM). Also the diode may be replaced by a series of diodes connected in series.

The station 4 comprises further an apparatus 16 schematically indicated for controlling the converter. This apparatus is adapted to control the converter of the station for regulating the current therethrough, in which the regulation takes place in a conventional way by the way in which the control pulses to the different current valves of the converter are designed. The apparatus attempts to regulate the current to that value, which is required for a desired power transmitting through the station between the two networks while assuring that the current does not increase over a highest acceptable value.

The plant has further members 17 schematically indicated and adapted to detect the direction and the intensity of the current through the converter as well as through which current valve the current is instantaneously flowing. Information thereabout is sent by said member to comparing means 18 being part of the control apparatus 16 and actuating this apparatus. These comparing means are adapted to, on the basis of information from said member 17, compare the intensity of the current with a predetermined lower first value exceeding the current normally accepted through the converter and a predetermined second upper value so as to influence the control of the converter by the control apparatus in a way to be now explained with reference to Fig 2.

It is illustrated in Fig 2 how the alternating current in the alternating voltage network 5 is subjected to different comparisons in said means 18, in which the function of said means is illustrated starting from the first current valve 9 as reference. The amplitude of the alternating current through the converter is in said means compared with a predetermined lower first value, which is indicated in the boxes 19, 20, and a second predetermined upper value, which is indicated in the boxes 21 and 22. The columns in the first quadrant in the boxes 19 and 21 means that the current flows from the alternating voltage network to the current voltage network, while the columns in the fourth quadrant in the boxes 20 and 22 indicate that the current flows in the opposite direction from the direct voltage network to the alternating voltage network. When the condition shown by the respective box 19-22 is fulfilled, i.e. a current through the converter in an indicated direction and above the level indicated in the box, the respective box sends a logical one to one or two (boxes 19 and 20) logical AND-gates 23-28. On the second input of these logical gates a logical one is delivered for 23, 25 and 27 if the first current valve 9 is not conducting and a logical one is delivered for 24, 26 and 28 if it is conducting. As long as the current through the converter is lower than the predetermined lower first value, which constitutes a limit value for the boxes 19 and 20, the means 18 will not interfere and influence the way in which the control apparatus 16 controls the converter. However, should the current for any reason, for example a sudden decrease of the alternating voltage as a consequence of a ground fault in the alternating voltage network, rapidly increase and arrive above this value said means 18 interferes.

The different cases which may then occur will now be discussed. We assume firstly that the current moves from the alternating voltage network to the direct voltage network when the first predetermined value of the amplitude thereof is exceeded, which means that a logical one will be sent from the box 19 to the gates 24 and 25. If the current flows through the second current valve 10, which would mean that it flows through the IGBT 13, then the gate 25 will receive a logical one at the second input thereof, which makes it actuating the control apparatus 16 to control the converter to commutate the current over to flow through the diode 14 of the first current valve 9 instead, wherethrough the current will be reduced instantaneously, so that a temporary blocking of the converter is avoided. When the first current valve 9 is conducting instead in the given moment, which means that both inputs of the gate 24 receive a logical one, then no commutation to the opposite current valve 10 may take place, since we in this case have a current through the diode 14 and a commutation would mean an even more rapid increase of the current through the IGBT 13. However, it is waited a certain period of time, which is indicated through the box 29, before the converter is temporarily blocked, and such a blocking takes place only if the current still is above said first value after elapsing of this period of time. It is pointed out that a box 29, 30 may have a more complex design so as to calculate the stresses on the diode. The length of this delay is determined by the specification for the diode used. By such a delay a temporary blocking may possibly be prevented from occurring also at diode current should the over current be caused by a transient over voltage in the alternating voltage network. Would for any reason the function according to the box 25 not function there is as an extra safety measure by the condition according to the box 21, which means that if the current flows through the IGBT 13 of the second current valve 10 and this exceeds a predetermined second upper value, then a temporary blocking of the converter will in spite of all be triggered.

Conversely, the following happens when the condition of the gates 26, 27 and 28 are fulfilled: the current through the IGBT 12 in the first current valve 9 above said first lower value (condition according to box 20 is fulfilled) means that the gate 26 actuates the control apparatus to control the converter to commutate over the current to flow through the diode 15 of the second current valve instead, so that an instantaneous reduction of the current is obtained. Is instead the condition according to box 20 fulfilled, but the current flows for the moment through the diode 15, then will the gate 27 receive a one at both inputs thereof, but any commutation to this opposite first current valve 9 may not take place, but nevertheless a delay of an activation of a temporary blocking of the converter in the way described above, which is indicated through the box 30. When the condition according to the box 22 is fulfilled, i.e. the current through the IGBT 12 of the first current valve 9 is above said predetermined second upper value, then the gate 28 will ensure a temporary blocking of the converter. The temporary blocking of the converter is preferably removed as soon as the current therethrough has sunk below the predetermined lower first value.

It is emphasised that the regular current regulation of the control apparatus "runs" all the time and is accordingly over-ridden by the regulation carried out by said means, should the conditions for their influence upon the control of the converter by the control apparatus be fulfilled.

The invention is of course not in any way restricted to the preferred embodiment described above, but many possibilities to modifications thereof would be apparent to a man skilled in the art, without departing from the basic idea of the invention, such as this is defined in the claims.

The plant may as already mentioned have an amount of components not shown in the drawings, such as for example harmonic filters for removing harmonic currents generated in the pulse with modulation.

Although symbols have been shown in Fig 1 for some members, means or the like, it is not at all necessary that these are present as separate components, but the functions they have to fulfil may very well be ensured by any component also having other tasks and for example may values be not directly measured but calculated from values of any other quantity measured.

The plant may have more than one station, in which preferably each station has said means for interfering with the current regulation. It is then also possible that one of the stations are voltage regulating, i.e. controls the converter thereof for regulating the voltage of the direct voltage network at this station.

Even if the functions corresponding to the boxes 21, 23, 22 and 28 in Fig 2 could be omitted, they constitute an additional safety.

The mentioning of the second predetermined level in claim 1 is not to be interpreted as restricting the invention, but it only mentions the obvious facts that the converter is of course blocked should the current gets to high.

In the members for detecting through which current valve the current flows detectors of the control pulses of the control apparatus may be included.

## Claims

1. A plant for transmitting electric power comprising a direct voltage network (1) and at least one alternating voltage network (5) connected thereto through a station (4), said station being adapted to perform transmitting of electric power between the direct voltage network and the alternating voltage network and comprising at least one VSC-converter (8) adapted to convert direct voltage into alternating voltage and conversely and an apparatus (16) for controlling the converter, said apparatus being adapted to control the converter of the station for regulating the current therethrough, said converter having on the direct voltage side thereof two current valves (9, 10) connected in series between the two poles (2, 3) of the direct voltage network with the alternating voltage network connected to a point for the interconnection (11) of the valves, and in which each current valve has at least one breaker (12, 13) of turn-on and turn-off type and a diode (14, 15) connected in anti-parallel therewith and the breakers of the two current valves are directed in the same direction,
**characterized in that** it also comprises members (17) adapted to detect the direction and intensity of the current through the converter and through which current valve the current flows and means (18) adapted to, based upon information from said members, compare the intensity of the current with a predetermined lower first value exceeding the current normally accepted through the converter and a predetermined second upper value and upon recognising the location of the current between said values and a recognising at the same time that the current flows through said breakers of one of the current valves, actuate the control apparatus to control the converter to commutate the current to flow through the other current valve.

2. A plant according to claim 1,
**characterized in that** said means (18) are adapted to activate an over current protection temporarily blocking the entire converter (8) upon a detection of a current having an intensity between said predetermined value and a simultaneous recognising that the current flows through the diode of one of the current valves.

3. A plant according to claim 2,
**characterized in that** said means (18) are adapted to activate the over current protection on the condition that the current after elapsing of a predetermined period of time (29) from it has exceeded said first value is still higher than this value.

4. A plant according to any of claims 1-3,
**characterized in that** said means (18) are adapted to, when a value of the current exceeding said second value is detected, activate an over current protection temporarily blocking the entire converter irrespectively whether the current flows through the diode or the breaker of the current valve conducting for the moment.

5. A plant according to any of claims 1-4,
**characterized in that** said breakers (12, 13) are IGBTs.

6. A plant according to any of claims 1-5,
**characterized in that** the control apparatus (16) is adapted to continuously carry out the regular current regulation also when said means (18) as a result of their comparisons activate the actuation of the converter (8).

7. A plant according to any of claims 1-6,
**characterized in that** it comprises more than one said VSC-converter (8).

8. A plant according to any of claims 1-7,
**characterized in that** it is designed for transmitting electric power through a diode voltage network (1) for High Voltage Direct Current (HVDC).

## Patentansprüche

1. Anlage zur Übertragung von elektrischer Energie, umfassend ein Direktspannungsnetz (1) und mindestens ein Wechselspannungsnetz (5), das über eine Station (4) mit diesem verbunden ist, wobei die Station geeignet ist, die Übertragung von elektrischer Energie zwischen dem Direktspannungsnetz und dem Wechselspannungsnetz durchzuführen, und mindestens einen VSC-Umrichter (8), der dazu geeignet ist, eine Direktspannung in Wechselspannung und umgekehrt umzuwandeln, sowie eine Vorrichtung (16) zum Steuern des Umrichters umfasst, wobei die Vorrichtung dazu geeignet ist, den Umrichter der Station zum Regeln des Stroms durch diese hindurch zu steuern, wobei der Umrichter an seiner Direktspannungsseite zwei Stromventile (9, 10) aufweist, die zwischen zwei Polen (2, 3) des Direktspannungsnetzes in Serie geschaltet sind, und das Wechselspannungsnetz an einem Punkt für die Verbindung (11) der Ventile angeschlossen ist, wobei jedes Stromventil mindestens einen Ausschalter (12, 13) vom Ein- und Ausschalttyp aufweist und antiparallel mit diesen eine Diode (14, 15) geschaltet ist, wobei die Ausschalter in dieselbe Richtung gerichtet sind,
**dadurch gekennzeichnet, dass** sie zudem Elemente (17), die dazu geeignet sind, die Richtung und die Stärke des Stroms durch den Umrichter und durch dasjenige der Ventile, durch das der Strom fließt, zu detektieren, und Mittel (18) umfasst, die dazu geeignet sind, auf der Grundlage von Informationen der Elemente die Stärke des Stroms mit einem ersten vorbestimmten unteren Wert, der den normalerweise durch den Umrichter akzeptierten Strom überschreitet, und einem zweiten vorbestimmten oberen Wert zu vergleichen und, nach dem Erkennen der Position des Stroms zwischen den Werten und dem gleichzeitigen Erkennen, dass der Strom durch die Ausschalter eines der Stromventile fließt, die Steuervorrichtung zur Steuerung des Umrichters zu betätigen, um den Strom zum Fließen durch das andere Stromventil umzupolen.

2. Anlage nach Anspruch 1, **dadurch gekennzeichnet, dass** die Mittel (18) dazu geeignet sind, eine Überstromsicherung, die den gesamten Umrichter (8) zeitweilig blockiert, zu aktivieren, wenn ein Strom detektiert wird, dessen Stärke zwischen dem vorbestimmten Wert liegt, und gleichzeitig erkannt wird, dass der Strom durch die Diode eines der Stromventile fließt.

3. Anlage nach Anspruch 2, **dadurch gekennzeichnet, dass** die Mittel (18) dazu geeignet sind, die Überstromsicherung unter der Bedingung zu aktivieren, dass der Strom nach Ablauf eines vorbestimmten Zeitraums (29) ab dem Überschreiten des ersten Werts noch immer über diesem Wert liegt.

4. Anlage nach einem der Ansprüche 1 bis 3, **dadurch gekennzeichnet, dass** die Mittel (18) dazu geeignet sind, eine Überstromsicherung, die den gesamten Umrichter zeitweilig blockiert, unabhängig davon zu aktivieren, ob der Strom durch die Diode oder den Ausschalter des im Moment führenden Ventils fließt, wenn ein Wert des Stroms detektiert wird, der den zweiten Wert überschreitet.

5. Anlage nach einem der Ansprüche 1 bis 4, **dadurch gekennzeichnet, dass** die Ausschalter (12, 13) IGBTs sind.

6. Anlage nach einem der Ansprüche 1 bis 5, **dadurch gekennzeichnet, dass** die Steuervorrichtung (16) dazu geeignet ist, die gewöhnliche Stromregelung auch dann kontinuierlich auszuführen, wenn die Mittel (18) als Ergebnis ihrer Vergleiche die Betätigung des Umrichters (8) aktivieren.

7. Anlage nach einem der Ansprüche 1 bis 6, **dadurch gekennzeichnet, dass** sie mehr als einen VSC-Umrichter (8) umfasst.

8. Anlage nach einem der Ansprüche 1 bis 7, **dadurch gekennzeichnet, dass** sie zur Übertragung von elektrischer Energie durch ein Diodenspannungsnetz (1) für Hochspannungsdirektstrom (HVDC) entwickelt ist.

## Revendications

1. Installation de transmission d'énergie électrique comprenant un réseau à courant continu (1) et au moins un réseau à courant alternatif (5) relié à celui-ci par l'intermédiaire d'un poste (4), ledit poste étant conçu pour réaliser la transmission d'énergie électrique entre le réseau à courant continu et le réseau à courant alternatif et comprenant au moins un convertisseur VSC (8) conçu pour convertir le courant continu en courant alternatif et inversement, et un appareil (16) pour commander le convertisseur, ledit appareil étant conçu pour commander le convertisseur du poste pour réguler le courant à travers celui-ci, ledit convertisseur ayant, sur son côté à courant continu, deux valves de courant (9,10) reliées en série entre les deux pôles (2,3) du réseau à courant continu avec le réseau à courant alternatif relié en un point pour l'interconnexion (11) des valves, et dans lequel chaque valve de courant a au moins un interrupteur (12,13) du type marche et arrêt et une diode (14,15) reliée de manière anti-parallèle à celui-ci et les interrupteurs des deux valves de courant sont dirigés dans le même sens,
**caractérisée en ce qu'**elle comprend également des éléments (17) conçus pour détecter le sens et l'intensité du courant à travers le convertisseur et à travers laquelle valve de courant le courant circule et des moyens (18) conçus pour comparer, en se basant sur des informations provenant desdits éléments, l'intensité du courant avec une première valeur inférieure prédéterminée dépassant le courant normalement accepté par le convertisseur et -une seconde valeur supérieure prédéterminée et, lors de la reconnaissance de l'emplacement du courant entre lesdites valeurs et une reconnaissance au même moment où le courant circule à travers lesdits interrupteurs de l'une des valves de courant, actionner l'appareil de commande pour commander le convertisseur à commuter le courant pour le faire circuler à travers l'autre valve de courant.

2. Installation selon la revendication 1,
**caractérisée en ce que** lesdits moyens (18) sont conçus pour activer un dispositif de protection à maximum de courant bloquant temporairement le convertisseur (8) dans sa totalité lors d'une détection d'un courant ayant une intensité entre ladite valeur prédéterminée et une reconnaissance simultanée que le courant circule à travers la diode de l'une des valves de courant.

3. Installation selon la revendication 2,
**caractérisée en ce que** lesdits moyens (18) sont conçus pour activer le dispositif de protection à maximum de courant à la condition où le courant, après que l'écoulement d'une période de temps prédéterminée (29) de celui-ci a dépassé ladite première valeur, soit encore supérieure à cette valeur.

4. Installation selon une quelconque des revendications 1-3,
**caractérisée en ce que** lesdits moyens (18) sont conçus pour activer, quand une valeur du courant dépassant ladite seconde valeur est détectée, un dispositif de protection à maximum de courant bloquant temporairement le convertisseur dans sa totalité indépendamment si le courant circule à travers la diode ou l'interrupteur de la valve de courant conducteur pour le moment.

5. Installation selon une quelconque des revendications 1-4,
**caractérisée en ce que** lesdits interrupteurs (12,13) sont des IGBT.

6. Installation selon une quelconque des revendications 1-5,
**caractérisée en ce que** l'appareil de commande (16) est conçu pour mettre en oeuvre de façon continue la régulation régulière de courant également quand lesdits moyens (18) à la suite de leurs comparaisons activent l'actionnement du convertisseur (8).

7. Installation selon une quelconque des revendications 1-6,
**caractérisée en ce qu'**elle comprend plus d'un dit convertisseur VSC (8).

8. Installation selon une quelconque des revendications 1-7,
**caractérisée en ce qu'**elle est conçue pour transmettre de l'énergie électrique à travers un réseau à courant de diodes (1) pour un Courant Continu Haute Tension CCHT (HVDC).
